# EUROPÄISCHE PATENTSCHRIFT

(11) **EP 2 179 200 B1**
(45) Veröffentlichungstag und Bekanntmachung des Hinweises auf die Patenterteilung: **14.09.2011**
(21) Anmeldenummer: 08760672.9
(22) Anmeldetag: 06.06.2008
(51) Int. Cl.: F16H 63/20

(54) **SCHALTVORRICHTUNG FÜR EIN SCHALTGETRIEBE EINES KRAFTFAHRZEUGS MIT VERRIEGELUNGSEINRICHTUNG**
SHIFTING DEVICE FOR A TRANSMISSION OF A MOTOR VEHICLE HAVING A LOCKING DEVICE
DISPOSITIF DE PASSAGE DES VITESSES POUR UNE BOÎTE DE VITESSES D'UN VÉHICULE MOTORISÉ COMPORTANT UN DISPOSITIF DE VERROUILLAGE

(30) Priorität: 18.07.2007 DE 102007033384
(43) Veröffentlichungstag der Anmeldung: 28.04.2010
(73) Patentinhaber: Schaeffler Technologies GmbH & Co. KG, 91074 Herzogenaurach (DE)
(72) Erfinder: KRÄMER, Klaus, 91460 Baudenbach (DE); HAUCK, Susanne, 91074 Herzogenaurach (DE); SCHWARZ, Uwe, 91052 Erlangen (DE)
(86) Internationale Anmeldenummer: PCT/EP2008/057102
(87) Internationale Veröffentlichungsnummer: WO 2009/010341

(56) Entgegenhaltungen:
- EP-A- 1 455 120
- DE-A1- 3 011 131
- DE-A1-102004 033 326
- DE-C1- 4 443 523
- DE-C1- 19 511 510

## Beschreibung

### Gebiet der Erfindung

Die Erfindung betrifft eine Schaltvorrichtung für ein Schaltgetriebe eines Kraftfahrzeugs mit einer Verriegelungseinrichtung, mit einer Schaltwelle zur Vorwahl und zum Schalten von Gängen in dem Schaltgetriebe, mit einer Mehrzahl von Schaltschienen zur Übertragung der Schaltmomenten von der Schaltwelle zu dem Schaltgetriebe, wobei die Schaltwelle senkrecht zu den Schaltschienen ausgerichtet ist und zur Vorwahl von Gängen axial verschiebbar und zum Schalten von Gängen um die eigene Achse schwenkbar angeordnet ist, wobei die Verriegelungseinrichtung einen Verriegelungsabschnitt zur Freigabe einer der Schaltschienen und zur Verriegelung der anderen Schaltschienen und einen Führungsabschnitt zur axialen Führung der Verriegelungseinrichtung an einem gehäusefesten Führungsorgan aufweist, wobei die Verriegelungseinrichtung ausgebildet und/oder angeordnet ist, so dass diese bei einer axialen Verschiebung der Schaltwelle zur Vorauswahl der Gänge mitgeführt und bei einer Verschwenkung der Schaltachse zum Schalten der Gänge freiläuft.

### Beschreibung

In vielen Fahrzeugen werden Schalt- und Wählbewegungen, die von einem Fahrer über einen Handschalthebel eingeleitet werden, über eine Schaltwelle übertragen, die auf eine Mehrzahl von Schaltschienen wirkt, die dann letztlich das Schaltmoment von der Schaltwelle zu einem Schaltgetriebe übertragen. Zur Auswahl einer bestimmten Schaltschiene wird die Schaltwelle bei bekannten Bauformen axial verschoben, zum Einlegen oder Schalten eines gewählten Ganges wird durch eine Schwenkbewegung der Schaltwelle um die eigene Achse die gewählte Schaltschiene in ihrer Längserstreckung verschoben.

Problematisch insbesondere bei einem manuellen Schalten von Gängen ist es, wenn fälschlicherweise nicht einer der beiden Gänge der gewünschten Schaltschiene eingelegt, sondern "diagonal geschaltet" wird, so dass ein Gang einer der anderen Schaltschienen geschaltet wird. Ein derartiges "Verschalten" führt zu dem Einlegen eines falschen Ganges, so dass im ungünstigstem Fall die Drehzahl und die Drehrichtung von Getriebe und Antriebsmotor nicht übereinstimmen und unerwartete Fahrsituationen oder sogar Beschädigungen des Schaltgetriebes bzw. des Antriebsmotors auftreten können.

Um ein derartiges "Verschalten" auszuschließen, sind Verriegelungssysteme bekannt, welche zwischen Schaltwelle und Schaltgetriebe angeordnet und ausgebildet sind, dass die nicht-gewählten Schaltschienen verriegelt und nur die gewählte Schaltschiene für einen Schaltvorgang freigegeben ist. Das Verriegelungssystem stellt somit sicher, dass der Fahrer durch eine Schaltbewegung nur einen Gang in der gewählten Schaltgasse bzw. der gewählten Schaltschiene einlegen kann.

Ein derartiges Verriegelungssystem ist beispielsweise aus der Druckschrift DE 30 111 31 A1 bekannt, welche eine Schaltvorrichtung für ein mechanisches Zahnrad-Wechselgetriebe von Kraftfahrzeugen betrifft. In dieser Druckschrift wird eine die Schaltgassenwählbewegung der Schaltwelle hinsichtlich der Erreichung bestimmter Schaltgassen begrenzende Sperrvorrichtung offenbart. Diese Sperrvorrichtung ist als ein Sperrblech ausgebildet, welches über zwei Schenkel auf der Schaltwelle aufgefädelt ist, wobei das Sperrblech mittels eines ringbundförmigen Absatzes zwischen den beiden Schenkeln bei der axialen Verstellung der Schaltwelle mitgeführt wird. Eine Verdrehung des Sperrblechs wird durch Eingriff einer an einem Getriebegehäuse befestigten Arretierungsschraube verhindert, die in eine Oberseite des Sperrblechs eingreift. Auf der bezüglich der Schaltwelle zu der Oberseite gegenüberliegenden Seite sind parallel zur Oberseite des Sperrblechs umgebogene Bereiche der Schenkel angeordnet, zwischen denen ein Schaltfinger durchgreift, so dass der Schaltfinger nur eine in diesem Bereich angeordnete Schaltgabel in einer Schaltgasse verstellen kann, die anderen Schaltgabeln jedoch durch die umgebogenen Schenkel verriegelt sind.

Die Druckschrift DE 39 132 69 A1, die wohl den nächstkommenden Stand der Technik bildet, betrifft eine Schaltvorrichtung für Wechselgetriebe von Kraftfahrzeugen, welche ebenfalls eine Schaltwelle zur Übertragung von Wähl- und Schaltmomenten aufweist. Auch diese Schaltvorrichtung zeigt ein Sperrblech, welches durch einen Bund eines Schaltfingers in axialer Richtung mitgenommen wird, wohingegen der Schaltfinger bzw. die Schaltwelle in Umfangsrichtung relativ zu dem Sperrblech drehbar ist. Ebenso wird dieses Sperrblech über eine Bolzen/Schlitz-Verbindung drehfest gehalten. Die Bolzen/Schlitz-Verbindung ist in axialer Draufsicht auf die Schaltvorrichtung in einem 90° Winkel relativ zu dem Verriegelungsbereich angeordnet.

Die gattungsgemäße DE 44 43 523 C1 offenbart eine Schaltanordnung mit mehreren Schaltstangen, welche durch einen Schaltfinger betätigt werden. Dabei ist der Schaltfinger von Sperrnocken beidseitig flankiert. Diese Sperrnocken lassen die Betätigung einer einzelnen Schaltstange durch den Schaltfinger zu. Die zu den Sperrnocken korrespondierende Führung ist auf der Gegenseite der Schaltwelle angeordnet.

Der Erfindung liegt die Aufgabe zugrunde, eine Schaltvorrichtung mit Verriegelungseinrichtung zur Verriegelung von Schaltschienen für ein Schaltgetriebe von Kraftfahrzeugen vorzuschlagen, welche betriebssicher und kostengünstig ist.

Diese Aufgabe wird durch ein Verriegelungssystem mit Merkmalen des Anspruchs 1 gelöst. Bevorzugte oder vorteilhafte Ausführungsformen der Erfindung ergeben sich aus den Unteransprüchen, der nachfolgenden Beschreibung und/oder den beigefügten Figuren.

Erfindungsgemäß wird eine Schaltvorrichtung mit Verriegelungseinrichtung zur Verriegelung von Schaltschienen für ein Schaltgetriebe von Kraftfahrzeugen vorgeschlagen, wobei das Schaltgetriebe vorzugsweise als ein mechanisches, mehrgängiges Zahnräderwechselgetriebe ausgebildet ist.

Als Bestandteile zählen zu der Schaltvorrichtung eine Schaltwelle, welche vorzugsweise über einen Handschalthebel betätigbar ist und welche zur Vorwahl und zum Schalten von Gängen in dem Schaltgetriebe angeordnet und/oder ausgebildet ist. Zur Übertragung der Schaltmomente von der Schaltwelle zu dem Schaltgetriebe ist eine Mehrzahl von Schaltschienen, vorzugsweise drei Schaltschienen zur Schaltung von sechs Gängen vorgesehen. Bei alternativen Ausführungsformen kann auch eine entsprechende Anzahl von Schaltschienen zur Schaltung einer anderen Gangzahl verwirklicht sein. Konstruktiv betrachtet ist die Schaltwelle - insbesondere in einer Draufsicht in radialer Richtung auf die Schaltwelle - senkrecht oder im Wesentlichen senkrecht zu den Schaltschienen ausgerichtet. Die Schaltwelle ist zur Vorwahl von Gängen bzw. Schaltschienen entlang ihrer eigenen Achse axial verschiebbar und zum Schalten von Gängen um die eigene Achse schwenkbar angeordnet. Beispielsweise weist die Schaltwelle einen Schaltfinger auf, welcher durch eine axiale Verschiebung der Schaltwelle zwischen den Schaltschienen verschoben werden kann und durch eine Schwenkung der Schaltwelle um die eigene Achse eine gewählte Schaltschiene in deren Längserstreckung verschiebt, um den entsprechenden Gang einzulegen.

Das Verriegelungssystem weist eine ein- oder mehrteilige Verriegelungseinrichtung auf, welche mindestens zwei funktionale Bereiche zeigt: Ein funktionaler Bereich betrifft einen Verriegelungsabschnitt, welcher in einer gewählten Position eine der Schaltschienen freigibt und die anderen Schaltschienen zugleich verriegelt. Durch Änderung der Vorwahl wird zugleich die freigegebene Schaltschiene geändert. Ein weiterer funktionaler Bereich betrifft einen Führungsabschnitt, welcher zur axialen Führung, insbesondere in axialer Erstreckung der Schaltwelle, der Verriegelungseinrichtung zusammen mit einem gehäusefesten Führungsorgan ausgebildet ist. Insbesondere ist das Führungsorgan an einem Schaltdomgehäuse, welcher die Schaltwelle und die Schaltschienen zumindest abschnittsweise aufnimmt, und/oder einem Getriebegehäuse starr und/oder ortsfest angeordnet. Die axiale Führung ist vorzugsweise so ausgebildet, dass die Verriegelungseinrichtung verdrehsicher in Umfangsrichtung um die Schaltwelle geführt ist.

Die Verriegelungseinrichtung ist derart ausgebildet und/oder angeordnet, so dass diese bei einer axialen Verschiebung der Schaltwelle zur Vorauswahl der Gänge mitgeführt wird, um - wie bereits erläutert - eine der Schaltschienen freizugeben und die anderen zu verriegeln, und bei einer Verschwenkung der Schaltachse zum Einlegen der Gänge jedoch freiläuft und von der Schwenkbewegung der Schaltwelle mechanisch entkoppelt ist.

Der Verriegelungsabschnitt ist als ein erster ebener Blechabschnitt ausgebildet, der in Flächenerstreckung eine Verriegelungsebene definiert. Zwischen Führungsabschnitt und dem Führungsorgan befindet sich eine flächige Gleit- und/oder Verschiebeebene, welche als Führungsebene definiert wird. Erfindungsgemäß wird vorgeschlagen, dass die Verriegelungsebene und die Führungsebene auf der gleichen Seite der Schaltwelle, also so, dass die eigene Achse der Schaltwelle nicht zwischen den Ebenen angeordnet ist, zueinander parallel angeordnet sind.

Vorzugsweise sind Verriegelungsabschnitt und Führungsabschnitt in axialer Richtung der Schaltwelle versetzt zueinander angeordnet und/oder in axialer Draufsicht zueinander parallel und/oder deckungsgleich und/oder überlappend positioniert. Bei einer besonders bevorzugten Ausführungsform der Erfindung sind die Verriegelungsebene und die Führungsebene zueinander koplanar angeordnet, wobei die beiden Ebenen zusammenfallen.

Eine Überlegung der Erfindung ist es, dass die aus dem Stand der Technik bekannten Verriegelungssysteme mit Sperrblechen mechanisch kompliziert aufgebaut und insbesondere bei der Fertigung und Montage aufwendig sind. Dies liegt nicht zuletzt daran, dass die Verriegelungsbereiche und die Führungsbereiche der bekannten Sperrbleche relativ zu der Schaltwelle gegenüberliegend oder in einem 90 °-Winkel zueinander angeordnet sind. Diese Anordnung führt dazu, dass die Sperrbleche als komplexe 3-D-Gebilde realisiert sein müssen, deren toleranzarme Fertigung und Montage mit einem hohen Aufwand verbunden ist. Demgegenüber schlägt die Erfindung vor, den Verriegelungsabschnitt und den Führungsabschnitt auf einer gemeinsamen Seite der Schaltwelle anzuordnen, was zu einer fertigungstechnischen Vereinfachung führt. Bei einer besonders bevorzugten konstruktiven Ausführung der Erfindung weist der Führungsabschnitt des Führungselements einen zweiten ebenen Blechabschnitt auf, dessen Flächenerstreckung die Gleitebene definiert. Somit werden Verriegelungsabschnitt und Führungsabschnitt jeweils durch einen ebenen Blechabschnitt mitgestaltet, wobei die durch die Blechabschnitte definierten Ebenen zueinander parallel und/oder koplanar angeordnet sind.

Bei einer besonders bevorzugten Weiterbildung der Erfindung bilden erster und zweiter ebener Blechabschnitt einen gemeinsamen, ebenen Blechabschnitt. Bei dieser Weiterbildung der Erfindung ist die Fertigung der Verriegelungseinrichtung besonders einfach, da Verriegelungsabschnitt und Führungsabschnitt durch einen einfachen Trennvorgang, zum Beispiel, durch eine Stanzung, herstellbar sind. Insbesondere sind in dem Bereich der genannten zwei Abschnitten keine Umformschritte notwendig. Damit ist die Verriegelungseinrichtung im Bereich der genannten zwei Abschnitte kostengünstig und mit hoher Genauigkeit fertigbar.

Bei einer möglichen, konstruktiven Umsetzung weist der Verriegelungsabschnitt eine randseitig offene Aussparung auf, die beispielsweise in Form eines Rechtecks gebildet ist, deren Breite an die Breite einer der Schaltschienen derart angepasst ist, dass jeweils die anderen Schaltschienen gesperrt sind. Die Aussparung bildet somit einen Durchlassbereich für genau eine Schaltschiene.

Bei einer Weiterbildung dieser Ausführungsform weisen die Schaltschienen Verriegelungsmäuler auf, in die der Verriegelungsabschnitt eingreift. Auch die Verriegelungsmäuler weisen in seitlicher Draufsicht einen vorzugsweise rechteckigen Querschnitt auf.

Bei einer weiteren bevorzugten Ausbildung der Erfindung umfassen entweder der Führungsabschnitt oder das Führungsorgan einen axial, insbesondere in axialer Erstreckung der Schaltwelle, ausgerichteten Führungskanal, wohingegen der jeweilige Partner, also das Führungsorgan bzw. der Führungsabschnitt, ein Führungselement, insbesondere einen Führungsstift aufweist, welches durch den Führungskanal in axialer Richtung geführt ist. Bei einer besonders bevorzugten Ausführungsform der Erfindung ist die Längserstreckung des Führungselements so angeordnet, dass diese in axialer Draufsicht auf die Schaltwelle senkrecht zu der Schaltwelle angeordnet ist, diese jedoch nicht schneidet.

Zur mechanischen Kopplung die Verriegelungseinrichtung und der Schaltwelle weist die Verriegelungseinrichtung einen Mitnahmeabschnitt und die Schaltwelle ein Mitnahmeorgan auf, welche derart ausgestaltet sind, dass die Verriegelungseinrichtung von der Schaltwelle bei einer axialen Bewegung der Schaltwelle mitgenommen, bei einer Schwenkbewegung der Schaltwelle, zumindest im Rahmen der Vorwahlschwenkung, ungekoppelt ist bzw. frei läuft. Diese Funktionalität erlaubt es, dass die Verriegelungseinrichtung bei einer Vorwahl von einer Schaltschiene zur nächsten Schaltschiene verschoben wird, bei einer Schaltbewegung der Schaltwelle dagegen nicht bewegt wird.

Bei einer ersten möglichen Ausführungsform der Erfindung ist das Mitnahmeorgan als ein Schaltfinger ausgebildet, welcher in einer randseitig offenen Aussparung des Mitnahmeabschnitts der Verriegelungseinrichtung eingreift. Bei dieser Ausführungsform wird die Verriegelungseinrichtung durch den Schaltfinger verschoben. Bei einer bevorzugten Realisierung dieser Ausführungsform weist der Schaltfinger endseitig eine Gabel auf, deren freier Gabelraum in Umfangsrichtung der Schaltwelle so dimensioniert ist, dass die Schaltwelle in azimutaler Richtung gegenüber der Verriegelungseinrichtung im Rahmen der Vorwahlschwenkung frei schwenken kann.

Bei einer zweiten Ausführungsform der Erfindung ist das Mitnahmeorgan als eine Schalthülse ausgebildet, auf der vorzugsweise mindestens ein Schaltfinger und/oder ein Nockenkamm angeordnet ist bzw. sind. Bei der zweiten Ausführungsform ist der Mitnahmeabschnitt als mindestens ein Mitnahmeschenkel ausgebildet, der sich in radialer Richtung zu der Schaltwelle erstreckt. Vorzugsweise ist der Mitnahmeschenkel auf der Schaltwelle, zum Beispiel über eine Durchgangsöffnung in dem Mitnahmeschenkel, schwenkbar aufgefädelt.

Bei dieser Ausführungsform ist vorzugsweise vorgesehen, dass in die Schalthülse eine in Umlaufrichtung verlaufende Mitnahmenut zur Durchführung und axialen Mitnahme des Mitnahmeschenkels eingebracht ist. Vorzugsweise, insbesondere zur Stabilisierung der Verriegelungseinrichtung, weist diese zwei Mitnahmeschenkel auf, welche von zwei in Umlaufrichtung verlaufenden Mitnahmenuten in der Schalthülse mitgeführt bzw. freigegeben sind.

Bei einer produktnahen Realisierung der Erfindung ist der bzw. die Mitnahmeschenkel rechtwinklig zum ersten, zweiten und/oder oder dritten Blechabschnitt angeordnet. Bei dieser Ausführungsform ist die Verriegelungseinrichtung in einer Längsschnittansicht durch die Schaltwelle vorzugsweise L- bzw. U-förmig ausgebildet, so dass das Verriegelungselement in dieser oder anderer Realisierung in kostengünstiger Weise durch eine Stanz-Biege-Verfahrensfolge herstellbar ist.

Weitere Merkmale, Vorteile und Wirkungen der Erfindung ergeben sich aus der nachfolgenden Beschreibung bevorzugter Ausführungsbeispiele und Zeichnungen der Erfindung. Dabei zeigen:
- Figur 1: eine Schaltvorrichtung mit einer Verriegelungseinrichtung als ein erstes Ausführungsbeispiel der Erfindung in einer schematischen, dreidimensionalen Darstellung schräg von der Seite;
- Figur 2: die Verriegelungseinrichtung in Figur 1 in einer schematischen, dreidimensionalen Darstellung schräg von vorne;
- Figur 3: die Verriegelungseinrichtung in den Figuren 1 und 2 in einer drei- dimensionalen, schematischen Schnittdarstellung in einer Radial- ebene senkrecht zu der Schaltwelle;
- Figur 4: eine Schaltvorrichtung mit einer Verriegelungseinrichtung als ein zweites Ausführungsbeispiel der Erfindung in einer schemati- schen, dreidimensionalen Längsschnittdarstellung in einer Ebene durch die Schaltwelle.

Gleiche oder einander entsprechende Teile sind in den Figuren jeweils mit den gleichen oder entsprechenden Bezugszeichen versehen.

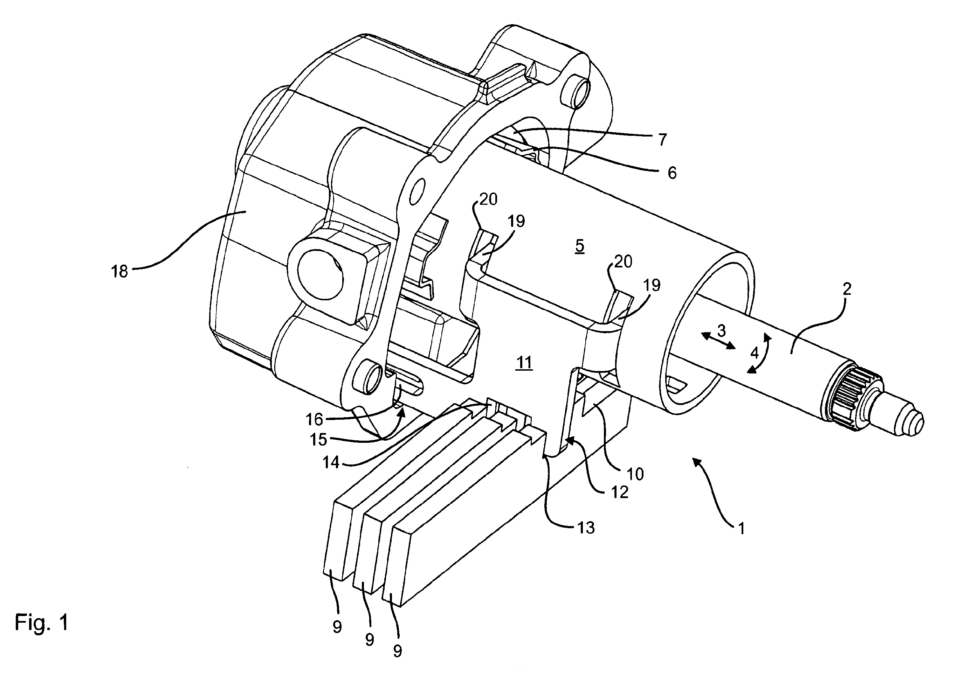

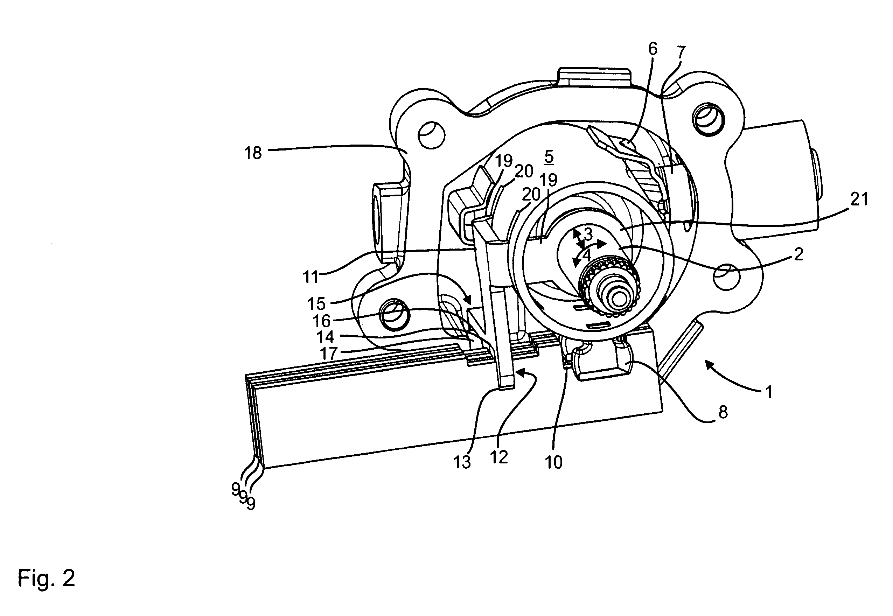

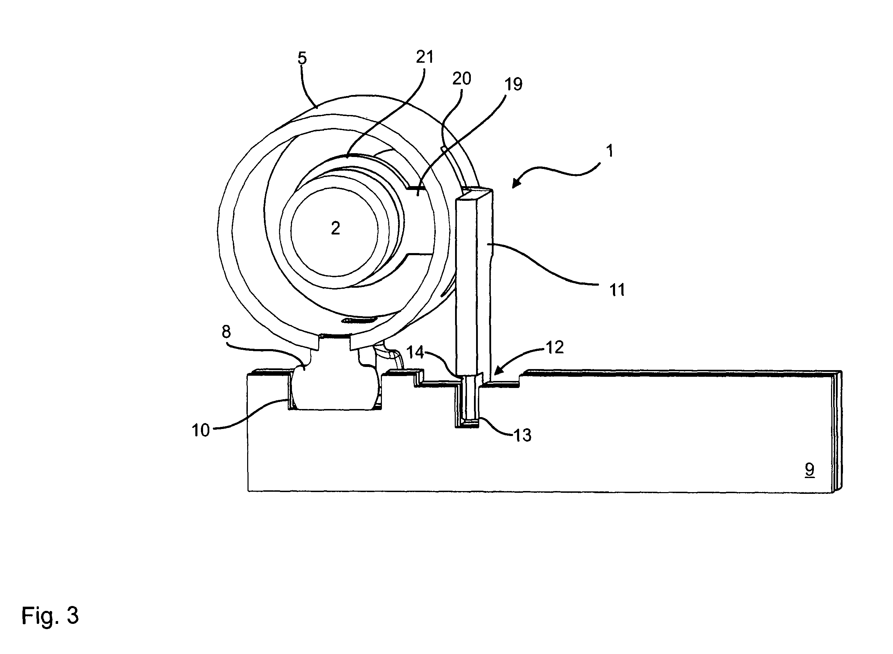

Die Figur 1 zeigt in der schematischen, dreidimensionalen Darstellung einen Ausschnitt einer Schaltvorrichtung 1 mit einem Verriegelungssystem. Die Schaltvorrichtung 1 umfasst eine Schaltwelle 2, welches an ihrem freien Ende wirktechnisch mit einem durch einen Fahrer bedienbaren Handschalthebel gekoppelt ist. Die Schaltwelle 2 ist längs des Pfeils 3 in ihrer axialen Erstreckung verschiebbar und zudem in Umlaufrichtung gemäß Pfeil 4 um die eigene Achse schwenkbar angeordnet. Wie sich insbesondere aus einer Zusammenschau mit den Figuren 2 und 3 ergibt, umfasst die Schaltvorrichtung 1 eine Schalthülse 5, welche koaxial zu der Schaltwelle 2 angeordnet ist und mit dieser verschiebe- und schwenkfest, zum Beispiel stoffschlüssig, insbesondere durch Schweißung, verbunden ist. Die Schalthülse 5 trägt an ihrer Außenseite einen Nockenkamm 6, welcher einen federbeaufschlagten Rastnocken 7 aufnimmt, sowie einen oder mehrere Schaltfinger 8, welcher sich in radialer Richtung von der Schalthülse 5 erstreckt und mit dieser stoffschlüssig verbunden ist.

Zur Übertragung von Schaltbewegungen an ein nicht dargestelltes Schaltgetriebe weist die Schaltvorrichtung 1 drei Schaltschienen 9 auf, welche zueinander parallel und senkrecht zu der Schaltwelle 2 ausgerichtet sind. An ihren der Schaltwelle 2 zugewandten Endabschnitten weisen die Schaltschienen 9 jeweils ein Schaltmaul 10 auf, welches als rechteckige, randseitig geöffnete Aussparung ausgebildet ist.

Zur Durchführung einer Wählbewegung wird die Schaltwelle 2 entlang des Pfeils 3 verschoben, so dass der Schaltfinger 8 in dem Schaltmaul 10 einer gewünschten Schaltschiene 9 positioniert wird. Durch eine Schwenkung der Schaltwelle entlang des Pfeils 4 wird der Schaltfinger 8 um die Schaltwelle 2 verschwenkt, schiebt die gewählte Schaltschiene 9 in Abhängigkeit der Schwenkrichtung in Figur 2 nach links bzw. nach rechts und legt auf diese Weise einen gewünschten Gang ein.

Um nun zu vermeiden, dass durch eine ungeschickte Bewegung des Fahrers der Schaltfinger 8 so geführt wird, dass nicht eine gewählte Schaltschiene 9, sondern eine benachbarte Schaltschiene 9 bewegt wird, weist die Schaltvorrichtung 1 eine Verriegelungseinrichtung 11 auf.

Die Verriegelungseinrichtung 11, die beispielsweise als Stanz-Biegeteil ausgebildet ist, umfasst einen Verriegelungsabschnitt 12, welcher als ein erster, ebener Blechabschnitt ausgebildet ist und in versetzt zu den Schaltmäulern 10 angeordnete Verriegelungsmäuler 13 in den Schaltschienen 9 eingreift, wobei dieser senkrecht zur Längserstreckung der Schaltschienen 9 durch die Schaltwelle 2 verschoben werden kann. Der Verriegelungsabschnitt 12 weist eine Aussparung 14 auf, die in der Breite in Erstreckungsrichtung des Pfeils 3 an die Breiten einer der Schaltschienen 9 derart angepasst ist, dass je nach Lage des Verriegelungsabschnitts 12 eine der Schaltschienen 9 schaltbar ist, wohingegen die anderen zwei Schaltschienen 9 verriegelt sind. In der in Figur 1 dargestellten Position ist die mittlere Schaltschiene 9 schaltbar, das heißt, in ihrer Längserstreckung verschiebbar und die anderen zwei Schaltschienen 9 durch den Verriegelungsabschnitt 12 gesperrt.

Um eine gute Führung des Verriegelungsabschnitts 12 entlang des Pfeils 3 sicherzustellen, weist die Verriegelungseinrichtung 11 einen Führungsabschnitt 15 auf, welcher als ein zweiter, ebener Blechabschnitt ausgebildet ist, in dem eine Führungsnut 16 bzw. ein Führungskanal 16 eingebracht ist. Wie sich wohl am besten aus der Figur 2 ergibt, greift durch den Führungskanal 16 ein Führungsstift 17, welcher starr und/oder ortsfest mit dem Gehäuse 18 oder - in anderen Ausführungsformen - mit dem Getriebedomgehäuse verbunden ist. Führungskanal 16 und Führungsstift 17 definieren eine Zwangsführung für den zweiten Blechabschnitt und somit für den Verriegelungsabschnitt 12, so dass dieser zwar in Pfeilrichtung 3 verschoben, jedoch nicht in Umfangsrichtung der Schaltwelle 2 gemäß Pfeil 4 verschwenkbar ist. Der den Führungskanal 16 tragende zweite Blechabschnitt und der den Verriegelungsabschnitt 12 tragende erste Blechabschnitt bilden einen gemeinsamen, ebenen und/oder ungebogenen und/oder unverformten Blechabschnitt, der in seiner Flächenerstreckung eine Verriegelungsebene, also eine Ebene in der der Verriegelungsabschnitt liegt und verschoben wird, und zugleich eine dazu koplanare und/oder deckungsgleiche Verschiebeebene, also eine Gleitebene in der der Führungsabschnitt 15 liegt und verschoben wird, definiert.

Zur Koppelung der Verriegelungseinrichtung 11 mit der Schaltwelle 2 weist dieses zwei Mitnahmeschenkel 19 auf, welche sich rechtwinklig von dem durch ersten und zweiten Blechabschnitt gebildeten gemeinsamen Blechabschnitt erstrecken. Die Mitnahmeschenkel 19 greifen durch zwei in der Schalthülse 5 eingebrachte, in Umlaufrichtung verlaufende, kanalförmige Führungsnuten 20 und weisen an ihrem freien Ende jeweils einen scheibenringförmigen Endabschnitt 21 auf, durch dessen freie Durchgangsöffnung die Schaltwelle 2 frei drehbar gefädelt ist.

Funktionell betrachtet wird die Verriegelungseinrichtung bei einer axialen Verschiebung der Schaltwelle 2 gemäß Pfeil 3 über die Schalthülse 5 mitgenommen, wobei die Mitnahmeschenkel 19 an den Begrenzungen der Führungsnuten 20 formschlüssig und kraftübertragend anliegen. In Umlaufrichtung gemäß Pfeil 4 erstrecken sich die Führungsnuten 20 dagegen so weit, dass der Verbund gebildet aus Schaltwelle 2 und Schalthülse 5 für eine Schaltbewegung verschwenkbar ist, ohne die Verriegelungseinrichtung 11 mitzunehmen, so dass die Verriegelungseinrichtung 11 entkoppelt von der Schwenkbewegung der Schaltwelle 2 angeordnet ist.

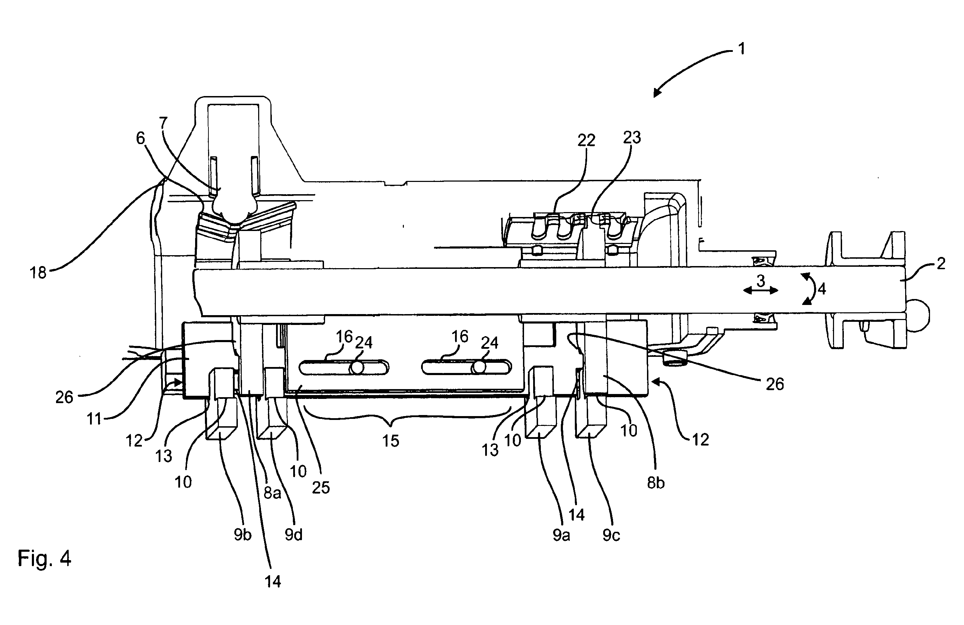

Die Figur 4 zeigt ein zweites Ausführungsbeispiel einer Schaltvorrichtung 1 in einer geschnittenen, dreidimensionalen Darstellung. Die Schaltvorrichtung 1 weist eine in der Figur 4 mittig verlaufende Schaltwelle 2 auf, welche einen ersten Schaltfinger 8 a und axial dazu beabstandet einen zweiten Schaltfinger 8 b trägt. Die Schaltfinger 8a bzw. 8b sind so angeordnet bzw. ausgebildet, um in senkrecht zu der Schaltwelle 2 angeordnete Schaltschienen 9 a, b, c, d einzugreifen. Hierzu weisen die Schaltschienen 9 a, b, c, d jeweils ein Schaltmaul 10 auf. Wie sich aus der Darstellung in Figur 4 ergibt, kann die Schaltwelle 2 vier Vorwahlpositionen einnehmen, so dass in einer ersten Vorwahlposition die Schaltschiene 9 a, in einer zweiten Vorwahlposition die Schaltschiene 9 b, in einer dritten Vorwahlposition die Schaltschiene 9 c und in einer vierten Wahlposition die Schaltschiene 9 d ausgewählt ist. Zur ergänzenden Führung der Schaltwelle 2 weist die Schaltvorrichtung 1 eine Schaltkulisse 22 auf, in die ein Kulissenfinger 23 je nach gewählter Position eingreift. Zur Unterstützung eines Einrastens des gewählten Ganges zeigt das Verriegelungssystem 1 einen Nockenkamm 6, in dem ein Rastnocken 7 einrastet.

Eine Verriegelungseinrichtung 11 ist in der Figur 4 im Wesentlichen als ein ebener Blechabschnitt ausgebildet, welcher im Bereich der beiden Schaltschienengruppen 9 a, c bzw. 9 b, d jeweils einen Verriegelungsabschnitt 12 trägt, wobei jeder Verriegelungsabschnitt 12 eine Aussparung 14 aufweist, welche durch Verschiebung der Verriegelungseinrichtung 11 in axialer Richtung gemäß Pfeil 3 in eine Freigabeposition für eine gewählte Schaltschiene 9 a, b, c, d, bringbar ist.

Ein Führungsabschnitt 15 der Verriegelungseinrichtung 11 ist ein Abschnitt des ebenen Blechabschnitts und weist zwei Führungsstifte 24 auf, die in dem Führungsabschnitt 15 festgelegt sind und in Führungskanälen 16, welche in einem gehäusefesten Führungsblech 25 eingebracht sind, geführt werden. Führungsblech 25 und Führungskanäle 16 bilden damit ein gehäuseseitiges Führungsorgan.

Zur Verstellung der axialen Position gemäß Pfeil 3 der Verriegelungseinrichtung 11 weist diese Führungsaussparungen 26 auf, in die als Gabeln ausgebildete Endabschnitte der Schaltfinger 8 a bzw. 8 b eingreifen. Der Eingriff ist dabei so realisiert, dass bei einer axialen Verschiebung der Schaltwelle 2 die Verriegelungseinrichtung 11 durch die Schaltfinger 8 a, b, geführt wird, wohingegen bei einer Verschwenkung der Schaltwelle 2 in Umlaufrichtung gemäß Pfeil 4 der Zwischenraum in der Gabel der Schaltfinger 8 a, b, so ausgebildet ist, dass der Schaltfinger 8 a, b, ohne Mitnahme der Verriegelungseinrichtung 11 frei schwenken kann.

Auch bei der zweiten Ausführungsform gemäß Figur 4 wird durch die Flächenerstreckung des gemeinsamen Blechabschnitts des Verriegelungselements 11 eine Führungsebene und eine koplanar oder deckungsgleich dazu angeordnete Verriegelungsebene definiert. Insgesamt zeigt sich das Verriegelungselement 11 in Figur 4 als ein einfach zu fertigendes Bauteil, welches durch einen Stanzprozess mit einem anschließenden Einsetzen der Führungsstifte 24 kostengünstig herstellbar ist.

### Bezugszeichenliste

- 1: Schaltvorrichtung
- 2: Schaltwelle
- 3: Pfeil in axialer Richtung
- 4: Pfeil in Umlaufrichtung
- 5: Schalthülse
- 6: Nockenkamm
- 7: Rastnocken
- 8 a, b: Schaltfinger
- 9, 9 a, b, c, d: Schaltschiene
- 10: Schaltmaul
- 11: Verriegelungseinrichtung
- 12: Verriegelungsabschnitt
- 13: Verriegelungsmaul
- 14: Aussparung
- 15: Führungsabschnitt
- 16: Führungsnut in axialer Richtung
- 17: Führungsstift im Eingriff mit der Führungsnut 16
- 18: Gehäuse
- 19: Mitnahmeschenkel
- 20: Führungsnut in Umlaufrichtung
- 21: Endabschnitt
- 22: Schaltkulisse
- 23: Kulissenfinger
- 24: Führungsstift im Eingriff mit der Führungsnut 20
- 25: Führungsblech
- 26: Führungsaussparung

## Patentansprüche

1. Schaltvorrichtung (1) für ein Schaltgetriebe eines Kraftfahrzeugs mit einer Verriegelungseinrichtung (11) mit einer Schaltwelle (2) zur Vorwahl und zum Schalten von Gängen in dem Schaltgetriebe, mit einer Mehrzahl von Schaltschienen (9) zur Übertragung der Schaltmomente von der Schaltwelle (2) zu dem Schaltgetriebe,
wobei die Schaltwelle (2) senkrecht zu den Schaltschienen (9) ausgerichtet ist und zur Vorwahl von Gängen axial verschiebbar und zum Schalten von Gängen um die eigene Achse schwenkbar angeordnet ist,
wobei die Verriegelungseinrichtung (11) einen Verriegelungsabschnitt (12) zur Freigabe einer der Schaltschienen (9) und zur Verriegelung der anderen Schaltschienen und einen Führungsabschnitt (15) zur axialen Führung der Verriegelungseinrichtung (11) an einem gehäusefesten Führungsorgan aufweist,
wobei die Verriegelungseinrichtung (11) ausgebildet und/oder angeordnet ist, so dass diese bei einer axialen Verschiebung der Schaltwelle (2) zur Vorauswahl der Gänge mitgeführt wird und bei einer Verschwenkung der Schaltwelle zum Schalten der Gänge freiläuft,
**dadurch gekennzeichnet,**
**dass** der Verriegelungsabschnitt (12) als ein erster ebener Blechabschnitt ausgebildet ist, der in Flächenerstreckung eine Verriegelungsebene definiert, und dass zwischen dem Führungsabschnitt (15) und dem Führungsorgan als Verschiebeebene eine Führungsebene definiert ist, wobei die Verriegelungsebene und die Führungsebene auf der gleichen Seite der Schaltwelle (2), also so, dass die eigene Achse der Schaltwelle (2) nicht zwischen den Ebenen angeordnet ist, zueinander parallel angeordnet sind.

2. Schaltvorrichtung (1) nach Anspruch 1, **dadurch gekennzeichnet, dass** die Verriegelungsebene und die Führungsebene koplanar zueinander angeordnet sind.

3. Schaltvorrichtung (1) nach Anspruch 1 oder 2, **dadurch gekennzeichnet, dass** der Führungsabschnitt (15) einen zweiten ebenen Blechabschnitt aufweist, dessen Flächenerstreckung die Verschiebebene definiert.

4. Schaltvorrichtung (1) nach Anspruch 3, **dadurch gekennzeichnet dass** der erste und der zweite ebene Blechabschnitt einen gemeinsamen, ebenen Blechabschnitt bilden.

5. Schaltvorrichtung (1) nach einem der vorhergehenden Ansprüche, **dadurch gekennzeichnet, dass** der Verriegelungsabschnitt (12) eine randseitig offene Aussparung (14) aufweist, deren Breite an die Breite einer der Schaltschienen (9) derart angepasst ist, dass jeweils die anderen Schaltschienen gesperrt sind.

6. Schaltvorrichtung (1) nach Anspruch 5, **dadurch gekennzeichnet, dass** die Schaltschienen Verriegelungsmäuler (13) aufweisen, in die der Verrieglungsabschn9tt (12) eingreift.

7. Schaltvorrichtung (1) nach einem der vorhergehenden Ansprüche, **dadurch gekennzeichnet, dass** der Führungsabschnitt (15) oder das Führungsorgan einen axial ausgerichteten Führungskanal (16) und das Führungsorgan bzw. der Führungsabschnitt ein Führungselement, insbesondere einen Führungsstift (17) aufweist, welches durch den Führungskanal (16) in axialer Richtung geführt ist.

8. Schaltvorrichtung (1) nach einem der vorhergehenden Ansprüche, **dadurch gekennzeichnet, dass** die Verriegelungseinrichtung (11) einen Mitnahmeabschnitt (19, 26) aufweist, über den die Verriegelungseinrichtung (11) mit einem Mitnahmeorgan (5, 8a,b) der Schaltwelle (2) zur axialen Mitnahme und im Rahmen der Vorwahlschwenkung zum azimutalen Freilauf gekoppelt ist.

9. Schaltvorrichtung (1) nach Anspruch 8, **dadurch gekennzeichnet, dass** das Mitnahmeorgan als ein Schaltfinger (8 a, b) ausgebildet ist, welcher in eine randseitige Aussparung (26) des Mitnahmeabschnitts der Verriegelungseinrichtung (11) eingreift.

10. Schaltvorrichtung (1) nach Anspruch 9, **dadurch gekennzeichnet, dass** der Schaltfinger (8a,b) endseitig eine Gabel aufweist, deren freier Gabelraum so dimensioniert ist, dass die Schaltwelle (2) im Rahmen der Vorwahlschwenkung in Umfangsrichtung gegenüber der Verriegelungseinrichtung (11) frei schwenken kann.

11. Schaltvorrichtung (1) nach Anspruch 8, **dadurch gekennzeichnet, dass** das Mitnahmeorgan als Schalthülse (5) ausgebildet ist.

12. Schaltvorrichtung (1) nach Anspruch 11, **dadurch gekennzeichnet, dass** der Mitnahmeabschnitt als mindestens ein Mitnahmeschenkel (19) ausgebildet ist, der sich in radialer Richtung erstreckt.

13. Schaltvorrichtung (1) nach Anspruch 12, **dadurch gekennzeichnet, dass** der Mitnahmeschenkel (19) auf der Schaltwelle (2) schwenkbar aufgefädelt ist.

14. Schaltvorrichtung (1) nach Anspruch 12 oder 13, **dadurch gekennzeichnet, dass** die Schalthülse (5) eine in Umlaufrichtung verlaufende Mitnahmenut (20) zur Durchführung, zur axialen Mitnahme und/oder zur azimutalen Freigabe des Mitnahmeschenkels (19) aufweist.

15. Schaltvorrichtung (1) nach einem der Ansprüche 12 bis 14, **dadurch gekennzeichnet, dass** der Mitnahmeschenkel (19) rechtwinklig zu dem ersten, zweiten und/oder dritten Blechbereich angeordnet ist.

## Claims

1. Shift device (1) for a shift gearbox of a motor vehicle having a locking device (11), having a shift shaft (2) for preselecting and for shifting gears in the shift gearbox, having a multiplicity of shift rails (9) for transmitting the shift torques from the shift shaft (2) to the shift gearbox,
the shift shaft (2) being aligned perpendicular to the shift rails (9) and being arranged so as to be axially movable for the preselection of gears and pivotable about its own axis for the shifting of gears,
the locking device (11) having a locking section (12) for releasing one of the shift rails (9) and for locking the other shift rails and having a guide section (15) for the axial guidance of the locking device (11) on a guide member fixed with respect to a housing,
the locking device (11) being designed and/or arranged so as to be carried along in the event of an axial movement of the shift shaft (2) for the preselection of the gears and so as to freewheel in the event of a pivoting movement of the shift shaft for the shifting of the gears,
**characterized**
**in that** the locking section (12) is designed as a first planar sheet-metal section which, in areal extent, defines a locking plane, and in that a guide plane is defined, as a movement plane, between the guide section (15) and the guide member, the locking plane and the guide plane being arranged parallel to one another on the same side of the shift shaft (2), that is to say such that the own axis of the shift shaft (2) is not arranged between the planes.

2. Shift device (1) according to Claim 1, **characterized in that** the locking plane and the guide plane are arranged in a coplanar configuration with respect to one another.

3. Shift device (1) according to Claim 1 or 2, **characterized in that** the guide section (15) has a second planar sheet-metal section whose areal extent defines the movement plane.

4. Shift device (1) according to Claim 3, **characterized in that** the first and the second planar sheet-metal section form a common planar sheet-metal section.

5. Shift device (1) according to one of the preceding claims, **characterized in that** the locking section (12) has a cutout (14) which is open at the edge and whose width is matched to the width of one of the shift rails (9) such that the other shift rails in each case are locked.

6. Shift device (1) according to Claim 5, **characterized in that** the shift rails have locking jaws (13) into which the locking section (12) engages.

7. Shift device (1) according to one of the preceding claims, **characterized in that** the guide section (15) or the guide member has an axially aligned guide channel (16) and the guide member or the guide section respectively has a guide element, in particular a guide pin (17), which is guided in the axial direction through the guide channel (16).

8. Shift device (1) according to one of the preceding claims, **characterized in that** the locking device (11) has a carry-along section (19, 26) by means of which the locking device (11) is coupled to a carry-along element (5, 8a,b) of the shift shaft (2) so as to be carried along axially and, during the preselection pivoting movement, so as to freewheel azimuthally.

9. Shift device (1) according to Claim 8, **characterized in that** the carry-along element is designed as a shift finger (8 a, b) which engages into a cutout (26) on the edge of the carry-along section of the locking device (11).

10. Shift device (1) according to Claim 9, **characterized in that** the shift finger (8a,b) has on the end side a fork whose free fork space is dimensioned such that the shift shaft (2) can pivot freely in the circumferential direction relative to the locking device (11) during the preselection pivoting movement.

11. Shift device (1) according to Claim 8, **characterized in that** the carry-along element is designed as a shift sleeve (5).

12. Shift device (1) according to Claim 11, **characterized in that** the carry-along section is designed as at least one carry-along limb (19) which extends in the radial direction.

13. Shift device (1) according to Claim 12, **characterized in that** the carry-along limb (19) is threaded onto the shift shaft (2) so as to be pivotable.

14. Shift device (1) according to Claim 12 or 13, **characterized in that** the shift sleeve (5) has a carry-along groove (20), which runs in the circumferential direction, for the leadthrough of, for axially carrying along and/or for azimuthally releasing the carry-along limb (19).

15. Shift device (1) according to one of Claims 12 to 14, **characterized in that** the carry-along limb (19) is arranged at right angles to the first, second and/or third sheet-metal region.

## Revendications

1. Dispositif de changement de vitesse (1) pour une transmission à changement de vitesse d'un véhicule automobile, comprenant un dispositif de verrouillage (11) avec un arbre de sélection (2) pour la présélection et pour le changement de vitesses dans la transmission à changement de vitesse, comprenant une pluralité de rails de changement de vitesse (9) pour le transfert des couples de changement de vitesse de l'arbre de sélection (2) à la transmission à changement de vitesse,
l'arbre de sélection (2) étant orienté perpendiculairement aux rails de changement de vitesse (9) et étant déplaçable axialement pour la présélection de vitesses et étant disposé de manière à pouvoir pivoter autour de l'axe propre pour le changement de vitesses,
le dispositif de verrouillage (11) présentant une portion de verrouillage (12) pour la libération de l'un des rails de changement de vitesse (9) et pour le verrouillage des autres rails de changement de vitesse et une portion de guidage (15) pour le guidage axial du dispositif de verrouillage (11) sur un organe de guidage fixé au boîtier,
le dispositif de verrouillage (11) étant réalisé et/ou disposé de telle sorte que dans le cas d'un déplacement axial de l'arbre de sélection (2) pour la présélection des vitesses, il soit entraîné en même temps et que dans le cas d'un pivotement de l'arbre de sélection pour le changement de vitesse, il tourne librement,
**caractérisé en ce que**
la portion de verrouillage (12) est réalisée sous forme de première portion de tôle plane, qui définit dans l'étendue en surface un plan de verrouillage, et **en ce qu'**entre la portion de guidage (15) et l'organe de guidage en tant que plan de déplacement est défini un plan de guidage, le plan de verrouillage et le plan de guidage étant disposés parallèlement l'un à l'autre du même côté de l'arbre de sélection (2), c'est-à-dire de telle sorte que l'axe propre de l'arbre de sélection (2) ne soit pas disposé entre les plans.

2. Dispositif de changement de vitesse (1) selon la revendication 1, **caractérisé en ce que** le plan de verrouillage et le plan de guidage sont disposés de manière coplanaire l'un par rapport à l'autre.

3. Dispositif de changement de vitesse (1) selon la revendication 1 ou 2, **caractérisé en ce que** la portion de guidage (15) présente une deuxième portion de tôle plane, dont l'étendue en surface définit le plan de déplacement.

4. Dispositif de changement de vitesse (1) selon la revendication 3, **caractérisé en ce que** la première et la deuxième portion de tôle plane forment une portion de tôle plane commune.

5. Dispositif de changement de vitesse (1) selon l'une quelconque des revendications précédentes, **caractérisé en ce que** la portion de verrouillage (12) présente un évidement (14) ouvert du côté du bord, dont la largeur est adaptée à la largeur de l'un des rails de changement de vitesse (9) de telle sorte que les autres rails de changement de vitesse soient respectivement bloqués.

6. Dispositif de changement de vitesse (1) selon la revendication 5, **caractérisé en ce que** les rails de changement de vitesse présentent des mors de verrouillage (13), dans lesquels s'engage la portion de verrouillage (12).

7. Dispositif de changement de vitesse (1) selon l'une quelconque des revendications précédentes, **caractérisé en ce que** la portion de guidage (15) ou l'organe de guidage présente un canal de guidage orienté axialement (16) et l'organe de guidage ou la portion de guidage présente un élément de guidage, en particulier une goupille de guidage (17), qui est guidée à travers le canal de guidage (16) dans la direction axiale.

8. Dispositif de changement de vitesse (1) selon l'une quelconque des revendications précédentes, **caractérisé en ce que** le dispositif de verrouillage (11) présente une portion d'entraînement (19, 26), par le biais de laquelle le dispositif de verrouillage (11) est accouplé à un organe d'entraînement (5, 8a, b) de l'arbre de sélection (2) pour l'entraînement axial et, dans le cadre du pivotement de présélection, pour le déplacement en roue libre azimutal.

9. Dispositif de changement de vitesse (1) selon la revendication 8, **caractérisé en ce que** l'organe d'entraînement est réalisé sous forme de doigt de sélection (8a, b), qui vient en prise dans un évidement (26) du côté du bord de la portion d'entraînement du dispositif de verrouillage (11).

10. Dispositif de changement de vitesse (1) selon la revendication 9, **caractérisé en ce que** le doigt de sélection (8a, b) présente du côté de l'extrémité une fourche, dont l'espace de fourche libre est dimensionné de telle sorte que l'arbre de sélection (2) puisse pivoter librement dans le cadre du pivotement de présélection dans la direction périphérique par rapport au dispositif de verrouillage (11).

11. Dispositif de changement de vitesse (1) selon la revendication 8, **caractérisé en ce que** l'organe d'entraînement est réalisé sous forme de manchon de sélection (5).

12. Dispositif de changement de vitesse (1) selon la revendication 11, **caractérisé en ce que** la portion d'entraînement est réalisée sous forme d'au moins une branche d'entraînement (19), qui s'étend dans la direction radiale.

13. Dispositif de changement de vitesse (1) selon la revendication 12, **caractérisé en ce que** la branche d'entraînement (19) est enfilée de manière pivotante sur l'arbre de sélection (2).

14. Dispositif de changement de vitesse (1) selon la revendication 12 ou 13, **caractérisé en ce que** le manchon de sélection (5) présente une rainure d'entraînement (20) s'étendant dans la direction périphérique, pour réaliser, entraîner axialement et/ou libérer le mouvement azimutal de la branche d'entraînement (19).

15. Dispositif de changement de vitesse (1) selon l'une quelconque des revendications 12 à 14, **caractérisé en ce que** la branche d'entraînement (19) est disposée à angle droit par rapport à la première, deuxième et/ou troisième région de tôle.
